# EUROPEAN PATENT SPECIFICATION

(11) **EP 2 379 350 B1**
(45) Date of publication and mention of the grant of the patent: **17.04.2013**
(21) Application number: 08875120.1
(22) Date of filing: 23.12.2008
(51) Int. Cl.: B60C 11/04

(54) **TIRE FOR VEHICLE WHEELS PROVIDED WITH TREAD BAND SHOWING IMPROVED FATIGUE RESISTANCE**
REIFEN FÜR FAHRZEUGRÄDER, DIE MIT EINEM EINE VERBESSERTE ERMÜDUNGSBESTÄNDIGKEIT AUFWEISENDEN LAUFFLÄCHENBAND VERSEHEN SIND
PNEUMATIQUES POUR ROUES DE VEHICULE DOTES D'UNE BANDE DE ROULEMENT PRESENTANT UNE RESISTANCE AMELIOREE A LA FATIGUE

(43) Date of publication of application: 26.10.2011
(73) Proprietor: Pirelli Tyre S.p.A., 20126 Milano (IT)
(72) Inventor: MINOLI, Claudio, I-20126 Milano (IT); MARTIN, Mario, I-20126 Milano (IT); RESMINI, Emiliano, I-20126 Milano (IT)
(74) Representative: Fabiano, Piero
(86) International application number: PCT/EP2008/011061
(87) International publication number: WO 2010/072235

(56) References cited:
- WO-A-2005/063508
- DE-A1-102007 003 062

## Description

### Field of the invention

The present invention relates to a tire for vehicle wheels provided with a tread band showing improved fatigue resistance.

In particular the present invention relates to a tire for heavy-load or commercial vehicle wheels.

### Background of the invention

A tire for vehicle wheels intended for use on heavy-load vehicles, such as, for example, trucks, buses, trailers and similar vehicles, usually comprises a carcass structure, having opposite lateral edges associated with respective right-hand and left-hand bead structures; a belt structure applied in a radially external position with respect to said carcass structure; a tread band radially superimposed on said belt structure; a pair of sidewalls applied laterally on opposite sides with respect to said carcass structure.

Particularly required in tires designed for use on heavy-load vehicles are optimal features, in terms of traction ability, pickup ability, steering properties and handling capability, also on slippery road surfaces.

It is well known that the belt structure may exert a very important influence both on the performances of the tire (for example, in terms of prompt response to steering and of direction steadiness) and on the service life thereof, in particular on the wear speed and evenness of the tread band. As a matter of fact, an uneven wear adversely affects the drive behaviour of the tire giving rise to vibrations and continuous deviations of the vehicle from its trajectory.

Moreover, a feature typically pursued in tires is a reduced and/or as much as possible even wear, so as to increase the tire performance in terms of kilometres that can be run (long life), noise and vibration reduction on running.

Usually, the tread band of a tire comprises an annular centre portion straddling the equatorial plane of the tire and two annular shoulder portions disposed on axially opposite sides relative to said annular centre portion and separated from the latter by respective circumferential grooves.

The tread band further comprises a plurality of cutouts, in form of grooves and sipes, disposed circumferentially and transversely so as to define a tread pattern formed by tread pattern elements separated from each other by the cutouts. The terms "grooves" and "sipes" are herewith used with the meaning of recesses and slits formed in the tread band of the tire, the sipes having a width smaller than the width of the grooves.

The tread pattern elements, thus separated by the cutouts, comprise a contact face intended to come into contact with the roadway during travel and lateral faces also defining the cutouts; the intersection of each lateral face with the contact face forms a ridge which facilitates the contact of the tire with the roadway, and in particular when the latter is wet.

Among tread pattern elements, the circumferential grooves define a plurality of circumferential elements named ribs that may be divided into blocks by transverse grooves or sipes.

In the tread band, the transverse sipes offer assistance in terms of traction and pickup ability, by virtue of the grip front defined on the tread band exactly by these sipes. These sipes in addition help in removing water, in case of a wet road surface.

On the contrary, the circumferential grooves, typically of bigger size, improve behaviour of the tire in terms of steering property and resistance to lateral thrusts. The circumferential and transverse grooves in addition have an influence on water elimination in the footprint area of the tire during running on a wet road surface, thus reducing the aquaplane phenomena.

Tires, especially commercial vehicle tires, may be removed from service due to anomalies on the tread region. The anomalies can be caused by non-uniform stress distribution laterally across the rib or block.

The central portion of the tread rib or block undergoes a lower stress than the edges of the tread rib or block, in fact the stress at the edge may be approximately twice as large as the stress at the central portion. The stress concentration typically causes anomalies at the edges of the tread rib or block.

Generation of cyclically repeated strain and stresses due to the tread entering and exiting the footprint area, can cause arising of cracks and torn portions on the groove bottom, as well as localised temperature increases and phenomena of fatigue of the elastomeric material.

Further it is to be taken into account the fact that the tread band directly contacting the road is continuously worn due to the friction of the tyre, while instead the material of the groove bottom remains in its place for the whole lifetime of the tire, allowing an easier propagation of cracks and torn.

These torn portions on the groove bottom can spread and reach the underlying belt structure that becomes uncovered giving rise to oxidation and/or corrosion phenomena that are very dangerous because they lead to breaking of the steel cords constituting the belt structure.

Moreover, localised temperature increases are to be avoided because they involve decay of the features of the elastomeric material present at the groove bottom, thus increasing the likelihood that cracks or tearing may start in these regions.

The axially outermost circumferential grooves are submitted to further stresses in the axial direction leading the grooves to bend moving the walls thereof close to and away from each other, particularly when it occurs that the vehicle goes up and down a pavement for particular manoeuvres.

Once an anomaly occurs at the edge of the rib or block, it will propagate to the whole rib or block; and often to adiacent ribs or blocks. The propagation of the anomaly occurs quickly during the tire rolling because of the intense fatigue stress to which the bottom of the circumferential groove is subjected.

Generally, anomalies are easily felt by the driver, especially when they are located on a steering tire, in form of loss of ride comfort and reduced handling of the vehicle.

However, if a tire having an anomaly is a driving tire or is located on the trailer, the driver may not sense any discomfort but he might, however, hear an increase in tire noise. In any case, the driver will pull the tire as a result of a subsequent visual inspection of the vehicle.

This may happen in a premature phase when considering the portions of the tire not suffering the anomaly.

The problem is particularly worsen with tread band based on elastomeric materials devoted to an enhanced wear resistance, as such elastomeric materials are quite stiff and show a low resistance to the cyclical strains or to the obstacles encountered on the road which the groove bottom is subjected to.

Several techniques have been used to overcome the aforesaid premature decay of the tire.

United States Patent US 6,213,181 B1, corresponding to the preamble of claim 1, discloses a tire having a pair of beads; a carcass ply having ends, each of the ends anchored to a respective one of the beads; at least one belt ply extending circumferentially around the tire and disposed radially outward of the carcass ply; and a tread band disposed radially outward of the at least one belt ply and formed from a first tread compound. The tread band has a plurality of tread ribs; at least one groove disposed between adjacent tread ribs; and a groove wall lining covering from the at least one groove. The groove wall lining is made from a second tread compound different than the first tread compound. According to the specifications, the tread compound forming the groove lining has a modulus of elasticity, measured at ten percent (10%) unit elongation, which is 40 to 80 percent of the modulus of elasticity of the tread compound forming the tread portion.

United States Patent application US 2006157177 discloses a crack suppressing rubber, which has elongation-at-break which is superior to elongation-at-break of a cap rubber, disposed so as to reinforce a vicinity of a groove bottom of a circumferential direction narrow groove provided in the vicinity of a shoulder of a tire tread. The elongation-at-break of the crack suppressing rubber of the tire is 130% or more of elongation-at-break of a rubber generally forming a tread surface of the tread.

### Summary of the invention

The Applicant noticed that the use of a lining layer superimposed on the tread band and in particular on the grooves is advantageous in promoting the desired outstanding resistance to the formation of anomalies.

However, the Applicant has further noticed that in the known solutions the lining layer, selected for its low modulus (or high elongation-at-break) to be superposed on the elastomeric material at high modulus (or low elongation-at-break) constituting the tread band, should bear the deformations which the tire and in particular the groove bottom is subjected to. The more the moduli (or the elongations-at-break) of the two materials differ each other, the more the lining layer material undergoes strain cycles particularly severe.

As a consequence, the lining layer may show a premature ageing, entailing stiffness and fragility of the material itself. The lining layer may also loose elasticity and the starting of defects, i.e. cracks and tearings, raises after a short operating time of the tire, vanishing the positive effect of the lining layer itself.

The Applicant has tested some samples of material realized with elastomeric compositions having the ratio of parameters (elastic modulus or elongation-at-break) indicated in the prior art with the aim to evaluate the behaviour of samples of tire provided with a lining layer made with such lining material in a subsequent fatigue and outdoor tests performed on the samples.

In particular, samples of the following exemplary elastomeric material were prepared and evaluated according to the following tests and measurements.

The dynamic mechanical properties were measured using an Instron dynamic device in the traction-compression mode according to the following methods.

A test piece of the abovementioned crosslinked elastomeric composition (vulcanized for 30 min at 151°C) having a cylindrical form (length = 25 mm; diameter = 12 mm), compression-preloaded up to a 20% longitudinal deformation with respect to the initial length, and kept at the prefixed temperature (70°C) for the whole duration of the test, was submitted to a dynamic sinusoidal strain having an amplitude of ±7.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E'). The results obtained are given in Table 1.

More particularly, in table 1 is shown the ratio of the values of elastic modulus (E') and elongation-at-break of the lining layer and a tread band.

Referring to the Elongation values of table 1, here, elongation-at-break means the elongation-at-break (%) as set forth in the JIS standard vulcanized rubber tensile test method (K6251).

The elastomeric compositions for the tread band and for the lining layer given in Table 1 were prepared as follows (the amounts of the various components are given in phr).

All the components, except, Sulfur, CTP, accelerator (CBS), were mixed together in an internal mixer (model Pomini PL 1.6) for about 5 min (1st Step). As soon as the temperature reached 140t5°C, the elastomeric composition was discharged.

Sulfur, CTP, accelerator (CBS) were then mixed with the 1st step composition in an internal mixer of the type with tangential rotors (Banbury) (model Pomini PL 1.6) for about 3 min, up to a temperature of 120±5°C and then the elastomeric composition was discharged (2nd step).

The tread band and the lining layer compositions were evaluated as described above and the results were summarized in the following Table 1.

**TABLE 1**

| SAMPLE | Tread band | Lining Layer |
|---|---|---|
| NR | 60 | 90 |
| BR | 40 | 10 |
| Stearic acid | 2 | 2 |
| Zinc oxide | 4 | 4 |
| X50S^{®} | 0 | 1.6 |
| Wax | 1 | 1 |
| Carbon BLACK | 50 | 45 |
| Ultrasil VN3® | 0 | 10 |
| TMQ | 1.0 | 1.0 |
| 6-PPD | 2 | 2 |
| Sulphur | 1 | 1.5 |
| CTP | 0.1 | 0.1 |
| CBS | 1.5 | 1.5 |
| Tandelta (70°C) | 0.160 | 0.14 |
| E' (70°C) | 6.1 | 4.84 |
| Elongation at break (%) | 380 | 503 |
| E' ratio (Tread band/Lining layer) | 1.26 | |
| Elongation at break ratio (Lining layer/Tread band) | 1.32 | |

Then, specimens of tire including a tread band and a lining structure superimposed on the whole axially outermost and external circumferential groove prepared from an elastomeric composition according to the above samples was manufactured and submitted to test.

The tires had size 295/80R22.5.

The above mentioned tires were subjected to a preparatory fatigue test on a laboratory machine (indoor test) to induce in few days the wear and fatigue of many months of a normal driving. To this end, the tire, at an inflation pressure of 8.5 bar, subjected to a radial load of 3550 Kg (nominal load), was rotated on a drum at constant speed (90 Km/h) for 100 h.

After the aforesaid preparatory test, each tire was mounted on one heavy load vehicle wheels and then subjected to an outdoor test consisting in subsequently climbing and going down a step 15 cm high for 50 times.

The test was repeated three times for each tire and at the end of the test a visual evaluation of the presence of cracks possibly present on the grooves has been effected, with the results given in table 2.

**TABLE 2**

| TIRE | Number of cracks |
|---|---|
| 1 st test | 16 |
| 2nd test | 15 |
| 3rd test | 18 |

The test performed showed the presence of anomalies in the tyres including a lining layer, selected for its low modulus (or high elongation-at-break) superposed on the elastomeric material at high modulus (or low elongation-at-break) constituting the tread band.

The Applicant has found that to improve the resistance of the groove and in particular in order to avoid a premature generation of defects and anomalies localized at the groove bottom, a lining structure may be superimposed on the tread band said lining structure comprising at least two radially overlapped layers having decreasing elastic moduli in direction radially away from the tread band. This way a radially gradual decrement of the elastic modulus of the overlapping layers as from the higher one of the tread band to the lowest of the radially more external layer, allows for a better distribution of stress and strain and accordingly for a better dumping thereof inside the elastomeric materials making the whole of the tread band and the lining structure.

The Applicant, in order to solve the above discussed problem, has thus conceived a tire for vehicle wheels comprising a tread band including a first elastomeric material with a first elastic modulus and comprising a plurality of circumferential grooves formed in said tread, at least one of said grooves including a lining structure superimposed on the tread band in at least the groove bottom.

Said lining structure comprises at least one radially internal layer with a second elastic modulus, lower than the first elastic modulus, and at least one radially external layer having a third elastic modulus, lower than the second elastic modulus.

According to a first aspect, the present invention relates to a tire for vehicle wheels comprising a tread band including a first elastomeric material having a first elastic modulus (E_{T}) and comprising a plurality of circumferential grooves formed in said tread band, each of said circumferential grooves being defined by a couple of lateral walls separated by a bottom, at least one of said grooves including a lining structure superimposed on the tread band in at least the groove bottom, wherein said lining structure comprises at least one radially internal layer superimposed on the tread and having a second elastic modulus (E₂) and at least one radially external layer joined to the internal layer and having a third elastic modulus (E₃), lower than that of the second elastic modulus (E₂).

Preferably the ratio between the second elastic modulus (E₂) of the internal layer of the lining structure and the first elastic modulus (E_{T}) of the tread band (E₂/E_{T}) is higher than 0,1 and lower than 1 and the ratio between the third elastic modulus (E₃) of the external layer and the modulus of the internal layer of the lining structure (E₃/ E₂) is higher than 0,1 and lower than 1.

The tire of the present invention is particularly suitable for steering wheels of heavy-load vehicles, such as, for example, trucks, buses, but can be conveniently used also on the driving wheels of these vehicles and on trailers.

Typically, the tire further comprises:
- a carcass structure, having opposite lateral edges associated with respective right-hand and left-hand bead structures;
- a pair of sidewalls applied laterally on opposite sides with respect to said carcass structure.

The tread band may include a first crosslinked elastomeric material obtained by crosslinking a first crosslinkable elastomeric composition comprising:
(a) at least one diene elastomeric polymer;
(b) at least one first reinforcing filler.

The layers of the lining structure may include a second crosslinked elastomeric material, obtained by crosslinking a second crosslinkable elastomeric composition comprising:
(a) at least one diene elastomeric polymer;
(c) at least one second reinforcing filler.

For the purposes of the present description and of the claims which follow, the term "phr" (acronym of "parts per hundred of rubber") means the parts by weight of a given component of the crosslinkable elastomeric composition per 100 parts by weight of the elastomeric polymer(s).

In the present description and in the following claims, in addition, the terms "axial" and "axially" are used to denote a direction substantially orthogonal to the equatorial plane of the tire, i.e. a direction substantially parallel to the rotation axis of the tire. Terms "radial" and "radially" are instead used to denote a direction substantially orthogonal to the rotation axis of the tire and belonging to a plane passing through this rotation axis.

Furthermore, terms "circumferential" and "circumferentially" are used to denote a direction substantially parallel to the equatorial plane of the tire along the annular extension thereof.

In addition, the expression "footprint area" of the tire means the portion of the peripheral surface of the tread band in contact with the road surface.

Furthermore, for the purposes of the present invention the "elastic modulus" of an elastomeric composition is measured with a piece of the elastomeric composition (vulcanized for 30 min at 151°C) having a cylindrical form (length = 25 mm; diameter = 12 mm), compression-preloaded up to a 20% longitudinal deformation with respect to the initial length, and kept at the prefixed temperature of 70°C. For the whole duration of the test, the piece sample is kept at the above temperature and submitted to a dynamic sinusoidal strain having an amplitude of ±7.5% with respect to the length under pre-load, with a 100 Hz frequency.

The present invention, in at least one of the above aspects, can have at least one of the following preferred features.

Advantageously in one embodiment of the invention, the lining structure is superimposed to the first crosslinked elastomeric material of the tread band in the axially outermost circumferential groove of the tire to be located on the external side of the wheel mounted on the heavy load vehicle, so as to protect said circumferential groove from the edge effect in particular in proximity of the axially external edges of the belt structure which is usually subjected to particularly severe stress.

In one embodiment of the invention the lining structure is superimposed to the first crosslinked elastomeric material of the tread band in each of the circumferential grooves of the tire.

In one embodiment of the invention the lining structure is superimposed to the first crosslinked elastomeric material of the tread band for the whole surface of the tread band so as to provide a complete protection.

In one further preferred embodiment the lining structure is superimposed to the first crosslinked elastomeric material of the tread band for the whole surface of the tread band with the at least one external layer of a third elastomeric material superimposed only on the groove.

In one embodiment of the present invention, the lining structure is superimposed to the first crosslinked elastomeric material of the tread band on the bottom and at least partially on the lateral walls of the groove.

In one embodiment of the present invention, the lining structure is superimposed to the first crosslinked elastomeric material of the tread band on the whole groove, lining the bottom of the groove and its lateral walls till the extremes of the groove.

In one embodiment of the present invention the lining structure may have a thickness greater than 1 mm, preferably greater than 2 mm.

In one embodiment of the present invention the thickness of the lining structure may be lower than 10 mm, preferably lower than 6 mm.

In one embodiment of the present invention each of the internal layer or external layer present in the lining structure may have a thickness greater than 0.5 mm, preferably greater than 1 mm.

In one embodiment of the present invention the thickness of the internal layer or external layer present in the lining structure may be lower than 5 mm, preferably lower than 3 mm.

Typically, the tread band comprises at least two circumferential grooves, symmetrically disposed on the opposite sides of the equatorial plane.

The number of the circumferential grooves may be more than two, preferably from three to six.

Generally, when the number of circumferential grooves is odd one of them lays on the equatorial plane of the tire, the other being disposed on axially opposite sides; when the number of grooves is even, they are disposed symmetrically on the opposite sides of the equatorial plane.

The present invention can apply to the so-called "motorway" tires or long distance tires or to the so-called "regional" tires.

According to one preferred embodiment, the diene elastomeric polymers (a) may be selected from those commonly used in sulphur-crosslinkable elastomeric compositions, that are particularly suitable for producing tires, that is to say from elastomeric polymers or copolymers with an unsaturated chain having a glass transition temperature (T_{g}) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymers (a) may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

According to one preferred embodiment, said first and/or second crosslinkable elastomeric composition comprises at least 10% by weight, preferably from 20% by weight to 100% by weight, with respect to the total weight of the at least one diene elastomeric polymer, of natural rubber.

According to one preferred embodiment, said first crosslinkable elastomeric material of the tread band or said second elastomeric material of the radially internal layer of the lining structure comprises a mixture of cis-1,4-polyisoprene (NR) and polybutadiene (BR).

According to one preferred embodiment, the ratio between the amount values of NR and BR in said elastomeric material of the radially internal layer of the lining structure is greater than the ratio between the amount values of NR and BR in said elastomeric material of the tread band.

According to one preferred embodiment, said at least one diene elastomeric polymer (a) used in the crosslinkable elastomeric composition of the radially external layer of the lining structure is cis-1,4-polyisoprene (NR).

The above reported crosslinkable elastomeric composition may optionally comprise at least one elastomeric polymer of one or more monoolefins with an olefinic comonomer or derivatives thereof (a'). The monoolefins may be selected from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

A diene elastomeric polymer (a), or (a') functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451,604, or United States Patents US 4,742,124 and US 4,550,142).

According to one preferred embodiment, the sulphur or derivatives thereof (c) may be selected, for example, from:
- soluble sulphur (crystalline sulphur);
- insoluble sulphur (polymeric sulphur);
- sulphur dispersed in oil (for example 33% sulphur known under the trade name Crystex^{®} OT33 from Flexsys);
- sulphur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylene-sulphenamide (OTOS), dithiodimorpholine (DTM or DTDM), caprolactam disulphide (CLD);
or mixtures thereof.

The least one first reinforcing filler (b), may advantageously be added to the crosslinkable elastomeric composition devoted to the realization of the tread band, in an amount generally less than about 120 phr, preferably of from about 20 phr to about 90 phr.

The at least one second reinforcing filler (c), may advantageously be added to the crosslinkable elastomeric composition devoted to the realization of the external layer, in an amount of from 0 to about 90 phr, preferably of from about 10 phr to about 60 phr

The first and second reinforcing fillers may be selected from those commonly used for crosslinked manufactured products, in particular for tires, such as, for example, carbon black, silica, alumina, aluminosilicates, calcium carbonate, kaolin, or mixtures thereof.

Particularly preferred both for the first and the second reinforcing fillers, are mixture of carbon black with silica.

According to one preferred embodiment, the elastomeric composition of the lining structure comprises a mixture of silica and carbon black in an increasingratio of amounts of silica and carbon black starting from the radially internal layer towards the radially external layer.

According to one preferred embodiment, said ratio is at least 1:4 for the radially internal layer and at least 1:1,5 for the radially external layer

The types of carbon black which may be advantageously used according to the present invention may be selected from those conventionally used in the production of tires, generally having a surface area of not less than 20 m²/g (determined by STSA - statistical thickness surface area - according to ISO 18852:2005).

The silica which may be advantageously used according to the present invention may generally be a pyrogenic silica or, preferably, a precipitated silica, with a BET surface area (measured according to ISO standard 5794/1) of from 50 m²/g to 500 m²/g, preferably of from 70 m²/g to 200 m²/g.

When a reinforcing filler comprising silica is present, the crosslinkable elastomeric composition may advantageously incorporate a coupling agent capable of interacting with the silica and of linking it to the diene elastomeric polymer during the vulcanization.

Coupling agents that are preferably used are those based on silane which may be identified, for example, by the following structural formula (I):

(R)₃Si-CₙH₂ₙ-X (I)

in which the groups R, which may be identical or different, are selected from: alkyl, alkoxy or aryloxy groups or from halogen atoms, on condition that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂n-Si-(R)₃ in which m and n are integers between 1 and 6 inclusive and the groups R are defined as above.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the crosslinkable elastomeric composition.

The crosslinkable elastomeric composition above disclosed may be vulcanized according to known techniques. To this end, in the crosslinkable elastomeric composition, after one or more steps of thermomechanical processing, the sulphur or derivatives thereof are incorporated together with vulcanization activators and accelerators. In the final processing step, the temperature is generally kept below 120°C and preferably below 100°C, so as to avoid any unwanted pre-crosslinking phenomena.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from 0 phr to 70 phr, preferably from 5 phr to 30 phr.

The crosslinkable elastomeric composition above disclosed may be prepared by mixing together the diene elastomeric polymer, the adhesion promoting additive, the sulphur or derivatives thereof with the reinforcing filler and the other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

### Brief description of the drawings

Further features and advantages of the present invention will become more apparent from the following detailed description of some preferred embodiments of a tire in accordance with the present invention, taken with reference to the accompanying drawings. In these drawings:
- Fig. 1 is a cross-section view of a tire according to the invention;
- Fig. 2 is a cross-section view of a particular of a tread band of one embodiment of tire according to the invention.

### Detailed description of the preferred embodiments

In the progress of the present specification and in the following claims, the expression "heavy-load vehicle" should be understood as referring to a vehicle belonging to the categories M2-M3, N2-N3 and 02-04 defined in "Consolidate Resolution of the Construction of Vehicles (R.E.3) (1997)", Annex 7, pages 52-59, "Classification and Definition of Power-Driven Vehicles and Trailers", such as lorries, trucks, tractors, buses, vans, trailers and other vehicles of this type.

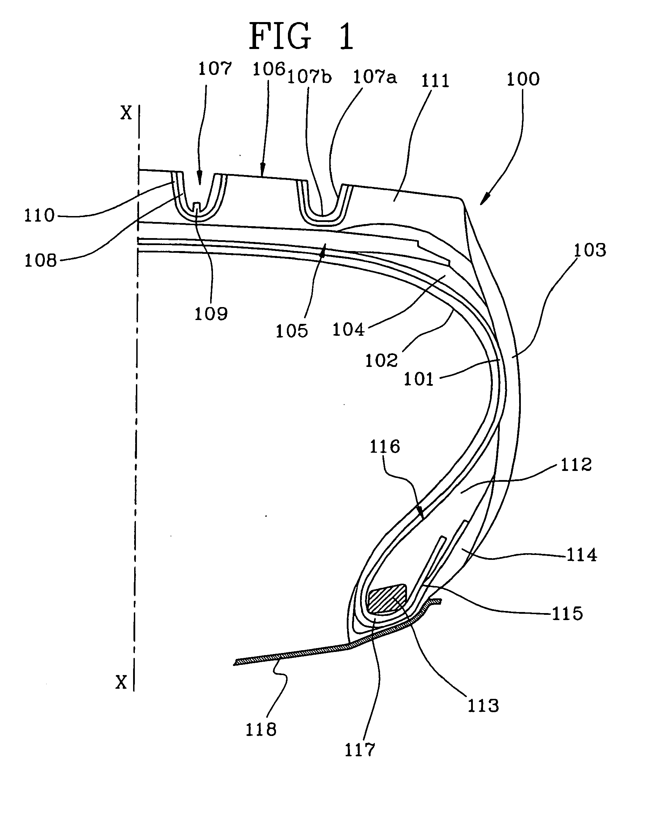

For simplicity, Fig. 1 shows only a portion of the tire, the remaining portion not represented being identical and symmetrically arranged with respect to the equatorial plane (x-x) of the tire.

The tire (100) comprises at least a carcass structure comprising at least a carcass ply (101), having opposite lateral edges associated with respective right-hand and left-hand bead structures (116); a tread band (106) applied in a radially external position with respect to said carcass ply (101) and comprising a plurality of circumferential grooves (107) formed in said tread, each of said circumferential grooves being defined by a couple of lateral walls (107a) separated by a bottom (107b), a pair of sidewalls (103) applied laterally on opposite sides with respect to said carcass ply (101).

The tread band (111) may further comprise a plurality of cutouts, in form of grooves and sipes, disposed circumferentially and/or transversely so as to define a tread pattern formed by tread pattern elements separated from each other by the cutouts.

Each bead structure (116) comprises at least one bead core (113) and at least one bead filler (112). The association between the carcass ply (101) and the bead core (113) is achieved here by folding back the opposite lateral edges of the carcass ply (101) around the bead core (113) so as to form the so-called carcass turn-up (117) as shown in Fig. 1.

The carcass ply (101) generally comprises of a plurality of reinforcing elements arranged parallel to each other and at least partially coated with a layer of a crosslinked elastomeric material. These reinforcing elements are usually made of steel wires stranded together, coated with a metal alloy (for example copper/zinc, zinc/manganese, zinc/molybdenum/cobalt alloys and the like).

The carcass ply (101) is usually of radial type, i.e. it incorporates reinforcing elements substantially according to radial planes. The bead core (113) is enclosed in the bead structure (116), defined along an inner circumferential edge of the tire (100), with which the tire engages on a rim (118) forming part of a vehicle wheel. The space defined by each carcass turn-up (117) contains a bead filler (112) usually made of a crosslinked elastomeric material radially superposed to the bead core (113).

In the case of tubeless tires, a rubber layer (102) generally known as a liner, which provides the necessary impermeability to the inflation air of the tire, may also be provided in an inner position relative to the carcass ply (101).

An antiabrasive strip (114) is usually placed in an axially external position relative to the carcass turn-up (117).

A reinforcing layer (115), known as "flipper" or chafer, is usually associated with the bead core (113) and the bead filler (112) so as to at least partially contact them.

A belt structure (105) is applied along the circumference of the carcass ply (101).

The belt structure (105) generally comprises a plurality of belt layers which are radially superposed and which incorporate a plurality of reinforcing elements, typically metal cords, said reinforcing elements being parallel to each other in each layer and intersecting with respect to the adjacent layer, inclined with respect to the equatorial plane (x-x) of the tire and coated and welded together by means of a crosslinked elastomeric material, (not represented in the Figures).

The belt structure (105) may also comprise at least one layer comprising cords disposed substantially according to a circumferential direction. In a preferred embodiment the belt structure (105) comprises two strips comprising cords disposed according to a circumferential direction located at axially outer portions at the belt structure (105).

An insert (104) is further located at the buttress area, i.e. the area where the lateral edges of the tread band (106) is connected to the sidewall (103). Usually, the insert (104) is interposed between the carcass ply (101), the belt structure (105), the tread band (106) and the sidewall (103).

According to the preferred embodiment of Fig. 1 the lining structure is superimposed on the circumferential grooves (107) so that to cover the lateral walls (107a) and the bottom (107b) till the edges of the groove

The lining structure includes at least one radially internal layer (110) superimposed on the tread band (106) and at least one external layer (108), superimposed to the at least one radially internal layer (110).

A stone ejector (109) in form of a protuberance for enhance the stone-drilling can be provided substantially in the middle at least of the central(s) groove bottom (107b) and can be preferably obtained with the radially external layer (108).

In one embodiment of the present invention, the lining structure is superimposed to the tread band on the bottom of the groove and at least partially on the lateral walls.

In some preferred embodiments (not illustrated) said lining structure is superimposed to the tread band of the tire only in the groove bottom (107b), and is provided at least in the axially outermost circumferential groove of the tire being external with respect to the wheel mounted on the heavy load vehicle to protect said groove from the edge effect in particular in proximity of the axially external edges of the belt structure which is usually subjected to particularly severe stress.

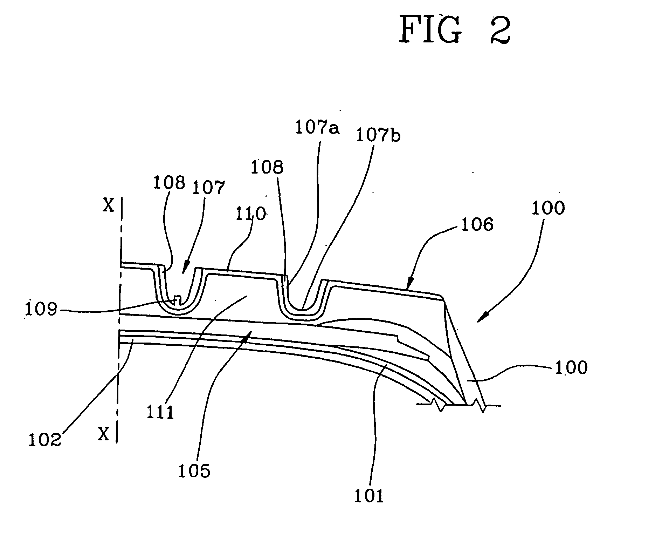

According to fig. 2 the at least the one radially internal layer (110) is superimposed on the whole rolling surface (106) of the tread band (111) with the external layer (108) superimposed only on the groove.

Both the lining structure and each of the layers included therein may have a substantially constant thickness or a variable one.

In case of variable thickness, preferably the lining structure or each of its layers are thicker in the groove bottom and taper towards the edges of the groove

The present invention will be further illustrated below by means of a preparation example of crosslinkable elastomeric compositions suitable to be used of a lining structure of a heavy-load tire, which is given for purely indicative purposes and without any limitation of this invention.

The samples of the following example were evaluated according to the following tests and measurements.

The dynamic mechanical properties were measured using an Instron dynamic device in the traction-compression mode according to the following methods.

A test piece of the abovementioned crosslinked elastomeric compositions (vulcanized for 30 min at 151°C) having a cylindrical form (length = 25 mm; diameter = 12 mm), compression-preloaded up to a 20% longitudinal deformation with respect to the initial length, and kept at the prefixed temperature (70°C) for the whole duration of the test, was submitted to a dynamic sinusoidal strain having an amplitude of ±7.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E'). The results obtained are given in Table 3.

In table 3 is shown the ratio of the values of elastic modulus (E') of the internal layer and the tread band and the ratio of the values of elastic modulus (E') of the external layer and the internal layer of the invention.

Preparation of elastomeric compositions for the tread band, internal layer and external layer.

The elastomeric compositions for the tread band and for the internal layer and the external layer in Table 3 were prepared as follows (the amounts of the various components are given in phr).

All the components, except, Sulfur, CTP, accelerator (CBS), were mixed together in an internal mixer (model Pomini PL 1.6) for about 5 min (1st Step). As soon as the temperature reached 140±5°C, the elastomeric composition was discharged.

Sulfur, CTP, accelerator (CBS) were then mixed with the 1st step composition in an internal mixer of the type with tangential rotors (Banbury) (model Pomini PL 1.6) for about 3 min, up to a temperature of 120±5°C and then the elastomeric composition was discharged (2nd step).

The tread band and the two samples of lining layer were evaluated as described above and the results were summarized in the following Table 3.

### EXAMPLE

**TABLE 3**

| SAMPLE | INVENTION | | |
|---|---|---|---|
| | Tread band | Internal layer | External layer |
| NR | 60 | 90 | 100 |
| BR | 40 | 10 | - |
| Stearic acid | 2 | 2 | 2 |
| Zinc oxide | 4 | 4 | 4 |
| X50S^{®} | 0 | 1.6 | 3.2 |
| Wax | 1 | 1 | 1 |
| Carbon BLACK | 50 | 45 | 35 |
| Ultrasil VN3® | 0 | 10 | 20 |
| TMQ | 1.0 | 1.0 | 1.0 |
| 6-PPD | 2 | 2 | 2 |
| Sulphur | 1 | 1.5 | 1.5 |
| CTP | 0.1 | 0.1 | 0.1 |
| CBS | 1.5 | 1.5 | 1.5 |
| E' (70°C) | 6.1 | 4.84 | 4.6 |
| E' ratio Internal layer/Tread band | 0.79 | | |
| E' ratio External layer/ Internal layer | 0.95 | | |

| | | | |
|---|---|---|---|
| NR: natural rubber; BR: high-cis 1,4 polybutadiene (Europrene^{®} Neocis BR40 - Polimeri Europa); Stearic Acid: STEARINA N (SOGIS) Zinc Oxide (green seal) (Zincol ossidi); X50S^{®}: silane coupling agent comprising 50% by weight of carbon black and 50% by weight of bis(3-triethoxysilylpropyl)tetrasulphide (EVONIK - Degussa); WAX: composition of microcrystalline wax (Antilux® 654 - Lanxess); Carbon Black: (OAN value near 125 and COAN near 100; with OAN/COAN measured with ASTM D2414) Ultrasil VN3® : Silica (EVONIK - Degussa); TMQ:polymerized 2,2,4-trimethyl-1,2-dihydroquinoline (Vulcanox^{®} 4020 - Bayer); 6-PPD: para-phenylenediamine (Santoflex^{®} 13 - Monsanto); Soluble sulphur: (Flexsys); CTP: cyclohexylthiophthalimide (Vulkalent^{®} G - Bayer); CBS (accelerator): N-cyclohexyl-2-benzothiazyl sulphenamide (Vulkacit® CZ - Bayer); | | | |

## Claims

1. Tire for vehicle wheels comprising a tread band including a first elastomeric material having a first elastic modulus (E_{T}) and comprising a plurality of circumferential grooves formed in said tread band, each of said circumferential grooves being defined by a couple of lateral walls separated by a bottom, at least one of said grooves including a lining structure superimposed on the tread band in at least the groove bottom, **characterised in that** said lining structure comprises, at least one radially internal layer superimposed on the tread and having a second elastic modulus (E₂) and at least one external layer joined to the internal layer and having a third elastic modulus (E₃), lower than that of the second elastic modulus (E₂).

2. Tire according to claim 1, wherein the ratio between the second elastic modulus (E₂) of the internal layer of the lining structure and the first elastic modulus (E_{T}) of the tread band (E₂/E_{T}) is higher than 0,1 and lower than 1 and the ratio between the third elastic modulus (E₃) of the external layer and the modulus of the internal layer of the lining structure (E₃/E2₃) is higher than 0,1 and lower than 1.

3. Tire according to claim 1 or 2, wherein said tire comprises:
- a carcass structure, having opposite lateral edges associated with respective right-hand and left-hand bead structures;
- a pair of sidewalls applied laterally on opposite sides with respect to said carcass structure.

4. Tire according to claim any one of the preceding claims, wherein said first elastomeric material comprises:
(a) at least one diene elastomeric polymer;
(b) at least one first reinforcing filler.

5. Tire according to any one of the preceding claims, wherein said lining structure comprises a second elastomeric material comprising:
(a) at least one diene elastomeric polymer;
(c) at least one second reinforcing filler.

6. Tire according to any one of claims 4 or 5, wherein said at least one diene elastomeric polymer (a) of the first or the second elastomeric material is selected among diene elastomeric polymers or copolymers with an unsaturated chain having a glass transition temperature (T_{g}) generally below 20°C, or elastomeric of one or more conjugated diolefins.

7. Tire according to claim 6, wherein said at least one first elastomeric material and/or at least the second elastomeric material of the radially internal layer of the lining structure comprises a mixture of cis-1,4-polyisoprene (NR) and polybutadiene (BR).

8. Tire according to claim 7, wherein a ratio between amount values of cis-1,4-polyisoprene (NR) and polybutadiene (BR) in said second elastomeric material of the radially internal layer of the lining structure is greater than the ratio between the amount values of cis-1,4-polyisoprene (NR) and polybutadiene (BR) in said first elastomeric material of the tread band.

9. Tire according to claim 6, wherein said at least one diene elastomeric polymer (a) of the radially external layer of the lining structure is cis-1,4-polyisoprene (NR).

10. Tire according to any one of the preceding claims from 4 to 9, wherein said first or second reinforcing fillers are selected from carbon black, silica, alumina, aluminosilicates, calcium carbonate, kaolin, or mixtures thereof.

11. Tire according to claim 10, wherein said second reinforcing filler comprises a mixture of carbon black with silica.

12. Tire according to claim 11, wherein the second elastomeric composition of the lining structure comprises a mixture of silica and carbon black in an increasing ratio between amounts of silica and carbon black starting from the radially internal layer towards the radially external layer.

13. Tire according to claim 12, wherein said ratio between amounts of silica and carbon black is at least 1:4 for the radially internal layer.

14. Tire according to claim 12, wherein said ratio between amounts of silica and carbon black is at least 1:1.5 for the radially external layer.

15. Tire according to any one of the preceding claims, wherein said lining structure of second elastomeric material is superimposed to the first crosslinked elastomeric material of the tread band in the axially outermost circumferential groove of the tire.

16. Tire according to any one of claims 1 to 14, wherein said lining structure of second elastomeric material is superimposed to the first crosslinked elastomeric material of the tread band in each of the circumferential grooves of the tire.

17. Tire according to any one of claims 1 to 14, wherein said lining structure of second elastomeric material is superimposed to the first crosslinked elastomeric material of the tread band for the whole surface of the tread band.

18. Tire according to any one of claims 1 to 16, wherein said lining structure of second elastomeric material is superimposed to the first crosslinked elastomeric material of the tread band on the bottom and at least partially on the lateral walls of the groove.

19. Tire according to claim 18, wherein said lining structure of second elastomeric material is superimposed to the first crosslinked elastomeric material of the tread band on the whole groove, lining the bottom of the groove and its lateral walls till the edges of the groove.

20. Tire according to any one of the preceding claims, wherein said lining structure has a thickness greater than 1 mm.

21. Tire according to any one of the preceding claims, wherein said lining structure has a thickness lower than 10 mm.

22. Tire according to any one of the preceding claims, wherein the thickness of the internal layer or external layer present in the lining structure is greater than 0.5 mm.

23. Tire according to any one of the preceding claims, wherein the thickness of the internal layer and/or external layer present in the lining structure is lower than 5 mm.

## Patentansprüche

1. Reifen für Fahrzeugräder, der ein Laufflächenband umfasst, das ein erstes elastomeres Material mit einem ersten Elastizitätsmodul (E_{T}) einschließt und eine Mehrzahl von im Laufflächenband gebildeten Umfangsrillen umfasst, wobei jede der Umfangsrillen durch ein Paar von Seitenwänden, die durch einen Boden getrennt sind, definiert ist, mindestens eine der Rillen eine Auskleidungsstruktur einschließt, die zumindest im Rillenboden über das Laufflächenband gelegt ist, **dadurch gekennzeichnet, dass** die Auskleidungsstruktur mindestens eine radial innere Schicht, die über die Lauffläche gelegt ist und ein zweites Elastizitätsmodul (E₂) hat, sowie mindestens eine äußere Schicht, die mit der inneren Schicht verbunden ist und ein drittes Elastizitätsmodul (E₃) hat, das niedriger ist als das zweite Elastizitätsmodul (E₂), umfasst.

2. Reifen gemäß Anspruch 1, worin das Verhältnis zwischen dem zweiten Elastizitätsmodul (E₂) der inneren Schicht der Auskleidungsstruktur und dem ersten Elastizitätsmodul (E_{T}) des Laufflächenbandes (E₂/E_{T}) größer als 0,1 und niedriger als 1 ist und das Verhältnis zwischen dem dritten Elastizitätsmodul (E₃) der äußeren Schicht und dem Modul der inneren Schicht der Auskleidungsstruktur (E₃/E₂) höher als 0,1 und niedriger als 1 ist.

3. Reifen gemäß Anspruch 1 oder 2, worin der Reifen umfasst:
- eine Karkassenstruktur mit gegenüberliegenden Seitenkanten, die mit entsprechenden rechten und linken Wulststrukturen assoziiert sind;
- ein Paar von Seitenwänden, die seitlich auf gegenüberliegenden Seiten in Bezug auf die Karkassenstruktur angebracht sind.

4. Reifen gemäß irgendeinem der vorhergehenden Ansprüche, worin das erste elastomere Material umfasst:
(a) mindestens ein Dien-Elastomerpolymer;
(b) mindestens einen verstärkenden Füllstoff.

5. Reifen gemäß irgendeinem der vorhergehenden Ansprüche, worin die Auskleidungsstruktur ein zweites Elastomermaterial umfasst, umfassend:
(a) mindestens ein Dien-Elastomerpolymer;
(c) mindestens einen zweiten verstärkenden Füllstoff.

6. Reifen gemäß irgendeinem der Ansprüche 4 oder 5, worin das mindestens eine Dien-Elastomerpolymer (a) des ersten oder des zweiten Elastomermaterials aus Dien-Elastomerpolymeren oder -copolymeren mit einer ungesättigten Kette, die eine Glasübergangstemperatur (T_{g}) im allgemeinen unterhalb von 20°C haben, oder Elastomeren aus ein oder mehreren konjugierten Diolefinen ausgewählt ist.

7. Reifen gemäß Anspruch 6, worin das mindestens eine erste Elastomermaterial und/oder das mindestens eine zweite Elastomermaterial der radial innenliegenden Schicht der Auskleidungsstruktur eine Mischung aus cis-1,4-Polyisopren (NR) und Polybutadien (BR) umfasst.

8. Reifen gemäß Anspruch 7, worin das Verhältnis zwischen den Mengenwerten von cis-1,4-Polyisopren (NR) und Polybutadien (BR) im zweiten Elastomermaterial der radial innenliegenden Schicht der Auskleidungsstruktur größer ist als das Verhältnis zwischen den Mengenwerten von cis-1,4-Polyisopren (NR) und Polybutadien (BR) im ersten Elastomermaterial des Laufflächenbandes.

9. Reifen gemäß Anspruch 6, worin das mindestens eine Dien-Elastomerpolymer (a) der radial äußeren Schicht der Auskleidungsstruktur cis-1,4-Polyisopren (NR) ist.

10. Reifen gemäß irgendeinem der vorhergehenden Ansprüche von 4 bis 9, worin der erste oder zweite verstärkende Füllstoff aus Ruß, Siliziumdioxid, Aluminiumoxid, Aluminosilikaten, Kalziumcarbonat, Kaolin oder Mischungen daraus ausgewählt ist.

11. Reifen gemäß Anspruch 10, worin der zweite verstärkende Füllstoff eine Mischung aus Ruß mit Siliziumdioxid umfasst.

12. Reifen gemäß Anspruch 11, worin die zweite Elastomerzusammensetzung der Auskleidungsstruktur eine Mischung von Siliziumdioxid und Ruß in einem zunehmenden Verhältnis zwischen den Mengen von Siliziumdioxid und Ruß von der radial innenliegenden Schicht beginnend zu der radial äußeren Schicht hin umfasst.

13. Reifen gemäß Anspruch 12, worin das Verhältnis zwischen den Mengen von Siliziumdioxid und Ruß für die radial innenliegende Schicht mindestens 1:4 ist.

14. Reifen gemäß Anspruch 12, worin das Verhältnis zwischen den Mengen von Siliziumdioxid und Ruß für die radial äußere Schicht mindestens 1:1,5 ist.

15. Reifen gemäß irgendeinem der vorhergehenden Ansprüche, worin die Auskleidungsstruktur des zweiten Elastomermaterials in der axial am weitesten außenliegenden Umfangsrille des Reifens über das erste vernetze Elastomermaterial des Laufflächenbandes gelegt ist.

16. Reifen gemäß irgendeinem der Ansprüche 1 bis 14, worin die Auskleidungsstruktur des zweiten Elastomermaterials in jeder der Umfangsrillen des Reifens über das erste vernetzte Elastomermaterials des Laufflächenbandes gelegt ist.

17. Reifen gemäß irgendeinem der Ansprüche 1 bis 14, worin die Auskleidungsstruktur des zweiten Elastomermaterials über die gesamte Oberfläche des Laufflächenbandes über das erste vernetzte Elastomermaterial des Laufflächenbandes gelegt ist.

18. Reifen gemäß irgendeinem der Ansprüche 1 bis 16, worin die Auskleidungsstruktur des zweiten Elastomermaterials auf dem Boden und zumindest teilweise an den Seitenwänden der Rille über das erste vernetzte Elastomermaterial des Laufflächenbandes gelegt ist.

19. Reifen gemäß Anspruch 18, worin die Auskleidungsstruktur des zweiten Elastomermaterials auf der gesamten Rille über das erste vernetzte Elastomermaterial des Laufflächenbandes gelegt ist, den Boden der Rille und ihre Seitenwände bis zu den Kanten der Rille auskleidend.

20. Reifen gemäß irgendeinem der vorhergehenden Ansprüche, worin die Auskleidungsstruktur eine Dicke von größer als 1 mm hat.

21. Reifen gemäß irgendeinem der vorhergehenden Ansprüche, worin die Auskleidungsstruktur eine Dicke niedriger als 10 mm hat.

22. Reifen gemäß irgendeinem der vorhergehenden Ansprüche, worin die Dicke der inneren Schicht oder der äußeren Schicht, die in der Auskleidungsstruktur vorhanden sind, größer als 0,5 mm ist.

23. Reifen gemäß irgendeinem der vorhergehenden Ansprüche, worin die Dicke der inneren Schicht und/oder äußeren Schicht, die in der Auskleidungsstruktur vorhanden sind, niedriger als 5 mm ist.

## Revendications

1. Pneu pour roues de véhicule comprenant une bande de roulement incluant un premier matériau élastomère ayant un premier module élastique (E_{T}) et comprenant plusieurs gorges circonférentielles formées dans ladite bande de roulement, chacune desdites gorges circonférentielles étant définie par un couple de parois latérales séparées par un fond, au moins une desdites gorges incluant une structure de revêtement superposée à la bande de roulement dans au moins le fond de gorge, caractérisé dans lequel ladite structure de revêtement comprend au moins une couche radialement interne superposée à la bande de roulement et ayant un second module élastique (E₂) et au moins une couche externe jointe à la couche interne et ayant un troisième module élastique (E₃), inférieur au second module élastique (E₂).

2. Pneu selon la revendication 1, dans lequel le rapport entre le second module élastique (E₂) de la couche interne de la structure de revêtement et le premier module élastique (ET) de la bande de roulement (E₂/E_{T}) est supérieur à 0,1 et inférieur à 1 et le rapport entre le troisième module élastique (E₃) de la couche externe et le module de la couche interne de la structure de revêtement (E₃/E₂) est supérieur à 0,1 et inférieur à 1.

3. Pneu selon la revendication 1 ou 2, dans lequel ledit pneu comprend :
- une structure de carcasse, ayant des bords latéraux opposés associés avec des structures de talons respectives droite et gauche.
- une paire de flancs appliqués latéralement sur des côtés opposés par rapport à ladite structure de carcasse.

4. Pneu selon l'une des revendications précédentes, dans lequel ledit premier matériau élastomère comprend :
a) au moins un polymère élastomère diène ;
b) au moins une première charge de renforcement.

5. Pneu selon l'une des revendications précédentes, dans lequel ladite structure de revêtement comprend un second matériau élastomère comprenant :
a) au moins un polymère élastomère diène ;
c) au moins une seconde charge de renforcement.

6. Pneu selon l'une des revendications 4 ou 5, dans lequel ledit au moins un polymère élastomère diène a) du premier ou du second matériau élastomère est sélectionné parmi les polymères élastomères diènes ou les copolymères à chaînes insaturées ayant une température de transition vitreuse (T_{g}) généralement inférieure à 20°C, ou les élastomères d'une ou plusieurs dioléfines conjuguées.

7. Pneu selon la revendication 6, dans lequel ledit au moins un premier matériau élastomère et/ou au moins le second matériau élastomère de la couche radialement interne de la structure de revêtement comprend un mélange de cis-1,4-polyisoprène (NR) et polybutadiène (BR).

8. Pneu selon la revendication 7, dans lequel le rapport entre les quantités de cis-1,4-polyisoprène (NR) et de polybutadiène (BR) dans ledit second matériau élastomère de la couche radialement interne de la structure de revêtement est supérieur au rapport entre les quantités de cis-1,4-polyisoprène (NR) et de polybutadiène (BR) dans ledit premier matériau élastomère de la bande de roulement.

9. Pneu selon la revendication 6, dans lequel ledit au moins un polymère élastomère diène a) de la couche radialement externe de la structure de revêtement est le cis-1,4-polyisoprène (NR).

10. Pneu selon l'une des revendications 4 à 9, dans lequel lesdites première ou seconde charges de renforcement sont sélectionnées parmi le noir de carbone, la silice, l'alumine, les aluminosilicates, le carbonate de calcium, le kaolin, ou leurs mélanges.

11. Pneu selon la revendication 10, dans lequel la seconde charge de renforcement comprend un mélange de noir de carbone avec de la silice.

12. Pneu selon la revendication 11, dans lequel la composition du second élastomère de la structure de revêtement comprend un mélange de silice et de noir de carbone dans un rapport croissant entre les quantités de silice et de noir de carbone à partir de la couche radialement interne vers la couche radialement externe.

13. Pneu selon la revendication 12, dans lequel ledit rapport entre les quantités de silice et de noir de carbone est au moins de 1:4 pour la couche radialement interne.

14. Pneu selon la revendication 12, dans lequel ledit rapport entre les quantités de silice et de noir de carbone est au moins de 1:1,5 pour la couche radialement externe.

15. Pneu selon l'une des revendications précédentes, dans lequel ladite structure de revêtement en second matériau élastomère est superposée au premier matériau élastomère réticulé de la bande de roulement dans la gorge circonférentielle du pneu la plus à l'extérieur axialement.

16. Pneu selon l'une des revendications 1 à 14, dans lequel ladite structure de revêtement en second matériau élastomère est superposée au premier matériau élastomère réticulé de la bande de roulement dans chacune des gorges circonférentielles du pneu.

17. Pneu selon l'une des revendications 1 à 14, dans lequel ladite structure de revêtement en second matériau élastomère est superposée au premier matériau élastomère réticulé de la bande de roulement sur l'ensemble de la surface de la bande de roulement.

18. Pneu selon l'une des revendications 1 à 16, dans lequel ladite structure de revêtement en second matériau élastomère est superposée au premier matériau élastomère réticulé de la bande de roulement sur le fond et au moins partiellement sur les parois latérales de la gorge.

19. Pneu selon la revendication 18, dans lequel ladite structure de revêtement en second matériau élastomère est superposée au premier matériau élastomère réticulé de la bande de roulement sur la totalité de la gorge, revêtant le fond de la gorge et ses parois latérales jusqu'aux bords de la gorge.

20. Pneu selon l'une des revendications précédentes, dans lequel ladite structure de revêtement a une épaisseur supérieure à 1 mm.

21. Pneu selon l'une des revendications précédentes, dans lequel ladite structure de revêtement a une épaisseur inférieure à 10mm.

22. Pneu selon l'une des revendications précédentes, dans lequel l'épaisseur de la couche interne ou externe présente dans la structure de revêtement est supérieure à 0,5mm.

23. Pneu selon l'une des revendications précédentes, dans lequel l'épaisseur de la couche interne et/ou externe présente dans la structure de revêtement est inférieure à 5mm.
